# DEMANDE DE BREVET EUROPEEN

(11) **EP 1 743 999 A2**
(43) Date de publication de la demande: **17.01.2007**
(21) Numéro de dépôt: 06300724.9
(22) Date de dépôt: 26.06.2006
(51) Int. Cl.: E05F 15/00, B60Q 1/52, G01S 13/93

(54) **DISPOSITIF D'ACTIONNEMENT MOTORISE D'UNE PORTE COULISSANGE D'UN VEHICULE AUTOMOBILE, COMPRENANT DES MOYENS DE DETECTION D'OBSTACLE ET PROCEDE DE GESTION DES MOYENS DE DETECTION.**

(30) Priorité: 11.07.2005 FR 0552129; 11.07.2005 FR 0552130
(71) Demandeur: Peugeot Citroen Automobiles SA, 78943 Vélizy-Villacoublay Cedex (FR)
(72) Inventeur: LEFRANC, Francis, 92150, SURESNES (FR); GUILLOTEAU, Rachel, 92380, GARCHES (FR)

(57) **Abrégé**

Dispositif d'actionnement motorisé d'une porte (2) coulissante d'un véhicule automobile (1), dans une première phase de déplacement depuis une position de fermeture appliquée contre la carrosserie du véhicule (1), jusqu'à une position de déhanchement écartée de ladite carrosserie mais sensiblement en vis à vis de l'ouverture ménagée dans la carrosserie, puis dans une seconde phase de déplacement, depuis la position de déhanchement jusqu'à une position d'ouverture maximale, écartée de ladite carrosserie et en retrait de l'ouverture ménagée dans la carrosserie, selon la direction longitudinale du véhicule (1), comprenant un moteur agissant sur la porte (2) en fonction d'un signal émis par un boîtier de gestion électronique de la porte (2) à partir de consignes telles qu'une demande d'ouverture ou de fermeture émanant de l'utilisateur ainsi que la position de la porte (2), caractérisé en ce qu'il comprend des premiers moyens de détection (5a,5b) d'un obstacle latéral situé sur la trajectoire de la porte (2) dans une zone latérale (3a) adjacente de celle-ci (2), et des seconds moyens de détection (6) d'un obstacle longitudinal situé sur la trajectoire de la porte (2) dans une zone longitudinale (3b) adjacente de celle-ci, lesdits moyens de détection (5a,5b,6) étant aptes à envoyer un signal au boîtier de gestion en cas d'obstacle, arrêtant ou interdisant toute action du moteur sur la porte (2).

## Description

La présente invention concerne un dispositif d'actionnement d'une porte coulissante d'un véhicule automobile.

L'invention se rapporte plus particulièrement à un dispositif d'actionnement motorisé d'une porte coulissante d'un véhicule automobile, dans une première phase de déplacement depuis une position de fermeture appliquée contre la carrosserie du véhicule, jusqu'à une position de déhanchement écartée de ladite carrosserie mais sensiblement en vis à vis de l'ouverture ménagée dans la carrosserie, puis dans une seconde phase de déplacement, depuis la position de déhanchement jusqu'à une position d'ouverture maximale, écartée de ladite carrosserie et en retrait de l'ouverture ménagée dans la carrosserie, selon la direction longitudinale du véhicule, comprenant un moteur agissant sur la porte en fonction d'un signal émis par un boîtier de gestion électronique de la porte à partir de consignes telles qu'une demande d'ouverture ou de fermeture émanant de l'utilisateur ainsi que la position de la porte.

De nombreux véhicules automobiles sont aujourd'hui pourvus d'une porte latérale coulissante. La motorisation d'une telle porte en facilite grandement la manipulation, de sorte que l'utilisateur a tendance à ne s'en remettre qu'aux commandes d'ouverture ou de fermeture de la porte, et se trouve moins vigilant quant à d'éventuels obstacles se trouvant sur la trajectoire de la porte. De tels obstacles peuvent être un enfant qu'il ne faudrait pas blesser, ou un plot de stationnement, un mur ou tout objet analogue susceptible d'endommager la porte. De plus, la généralisation des commandes à distance sur les véhicules, ne permet guère à un utilisateur se trouvant à quelques mètres du véhicule d'estimer avec justesse la possibilité d'ouvrir la porte sans risque pour un tiers ou pour la porte elle-même.

Par ailleurs, les risques évoqués précédemment ont amené à proposer des véhicules équipés de portes latérales coulissantes motorisées, conformés de manière que la porte ne dépasse pas de l'extrémité arrière du véhicule lorsqu'elle se trouve dans sa position d'ouverture maximale, en retrait de l'ouverture vers l'arrière du véhicule. Incidemment, sur les véhicules connus, la taille de l'ouverture ménagée dans la carrosserie ainsi que la distance entre le bord arrière de l'ouverture latérale et l'extrémité arrière du véhicule sont adaptés à ce que la porte ne puisse dépasser à l'arrière du véhicule. Ceci constitue une contrainte extrêmement gênante pour envisager certaines formes ou certains styles de carrosserie.

On connaît également dans l'art antérieur des dispositifs de détection de l'ouverture d'une trappe à carburant d'un véhicule, permettant d'interdire ou d'arrêter le déplacement d'une porte coulissante susceptible de heurter ladite trappe lorsque qu'elle se trouve en position ouverte. Un tel dispositif connu est par exemple décrit dans le document FR 2 856 015 A1.

Ces dispositifs de détection sont généralement montés sur la trappe elle-même ou son environnement, de sorte que de tels dispositifs de détection ne permettent pas d'identifier un obstacle tels qu'un mur se trouvant sur la trajectoire de la porte vers l'arrière du véhicule.

En outre la zone à surveiller à proximité de la porte varie selon ses phases de déplacement sur sa trajectoire, et, outre les problèmes évoqués précédemment que l'invention vise à résoudre, l'invention a également pour but d'assurer une surveillance plus précise et efficace de ces différentes zones ainsi qu'une meilleure gestion des moyens de détection aux fins d'assurer leur plus grande longévité de vie.

A ce titre, l'invention a pour objet un dispositif d'actionnement motorisé d'une porte coulissante d'un véhicule automobile, dans une première phase de déplacement depuis une position de fermeture appliquée contre la carrosserie du véhicule, jusqu'à une position de déhanchement écartée de ladite carrosserie mais sensiblement en vis à vis de l'ouverture ménagée dans la carrosserie, puis dans une seconde phase de déplacement, depuis la position de déhanchement jusqu'à une position d'ouverture maximale, écartée de ladite carrosserie et en retrait de l'ouverture ménagée dans la carrosserie, selon la direction longitudinale du véhicule, comprenant un moteur agissant sur la porte en fonction d'un signal émis par un boîtier de gestion électronique de la porte à partir de consignes telles qu'une demande d'ouverture ou de fermeture émanant de l'utilisateur ainsi que la position de la porte, caractérisé en ce qu'il comprend des moyens de détection d'obstacle situés sur la trajectoire de la porte aptes à envoyer un signal au boîtier de gestion en cas d'obstacle, arrêtant ou interdisant toute action du moteur sur la porte.

Selon d'autres caractéristiques de l'invention :
- les moyens de détection comprennent des premiers moyens de détection d'un obstacle latéral situé sur la trajectoire de la porte dans une zone latérale adjacente de celle-ci, et des seconds moyens de détection d'un obstacle longitudinal situé sur la trajectoire de la porte dans une zone longitudinale adjacente de celle-ci, lesdits moyens de détection étant aptes à envoyer un signal au boîtier de gestion en cas d'obstacle, arrêtant ou interdisant toute action du moteur sur la porte,
- les premiers moyens de détection sont activés lors de la première phase de déplacement, tandis que les seconds moyens de détection sont activés lors de la seconde phase de déplacement,
- au moins une partie des premiers moyens de détection est désactivée lors de la seconde phase de déplacement,
- les premiers moyens de détection d'obstacle sont situés sur le côté de la porte tandis que les seconds moyens de détection d'obstacle sont situés sur le chant de la porte tourné du côté de la trajectoire à parcourir,
- au moins une partie des moyens de détection d'obstacle sont des capteurs à ultrason.

L'invention a également pour objet un procédé de gestion des capteurs de proximité comprenant les étapes suivantes : un capteur émet un signal, puis la totalité des capteurs se met en mode réception d'un éventuel signal de retour renvoyé par un obstacle, et ainsi de suite, chaque capteur émet un signal à tour de rôle et selon une permutation circulaire.

L'invention a enfin pour objet un véhicule automobile, comprenant une porte latérale coulissante, déplaçable de manière motorisée entre une position de fermeture appliquée contre la carrosserie et une position d'ouverture maximale, écartée de ladite carrosserie et en retrait de l'ouverture ménagée dans la carrosserie, selon la direction longitudinale du véhicule, comprenant un dispositif d'actionnement de la porte coulissante tel que décrit précédemment.

Selon une autre caractéristique de l'invention, la position d'ouverture maximale de la porte coulissante correspond à un dépassement longitudinal de la porte vers l'avant ou vers l'arrière par rapport à l'extrémité respectivement avant ou arrière de la carrosserie du véhicule.

L'invention sera mieux comprise, et d'autres buts, caractéristiques, détails et avantages de celle-ci apparaîtront plus clairement de la description explicative qui va suivre faite en référence aux dessins schématiques annexés donnés uniquement à titre d'exemple illustrant un mode de réalisation de l'invention et dans lesquels :
- les figures 1 à 3 représentent schématiquement vu de dessus différentes phases d'ouverture de la porte latérale coulissante d'un véhicule commandée par un dispositif d'actionnement selon l'invention, représentant la porte respectivement dans une position de fermeture, dite position A, une position intermédiaire, dite position B, et une position d'ouverture maximale, dite position C.
- les figures 4 et 5 représentent schématiquement l'implantation sur la porte des moyens de détection d'obstacle selon l'invention, vu respectivement de côté et de l'arrière de la porte,
- les figures 6 à 9 représentent schématiquement différentes phases d'activation des moyens de détection d'obstacle selon l'invention,
- la figure 10 représente le logigramme de fonctionnement des moyens de détection d'obstacle selon l'invention.

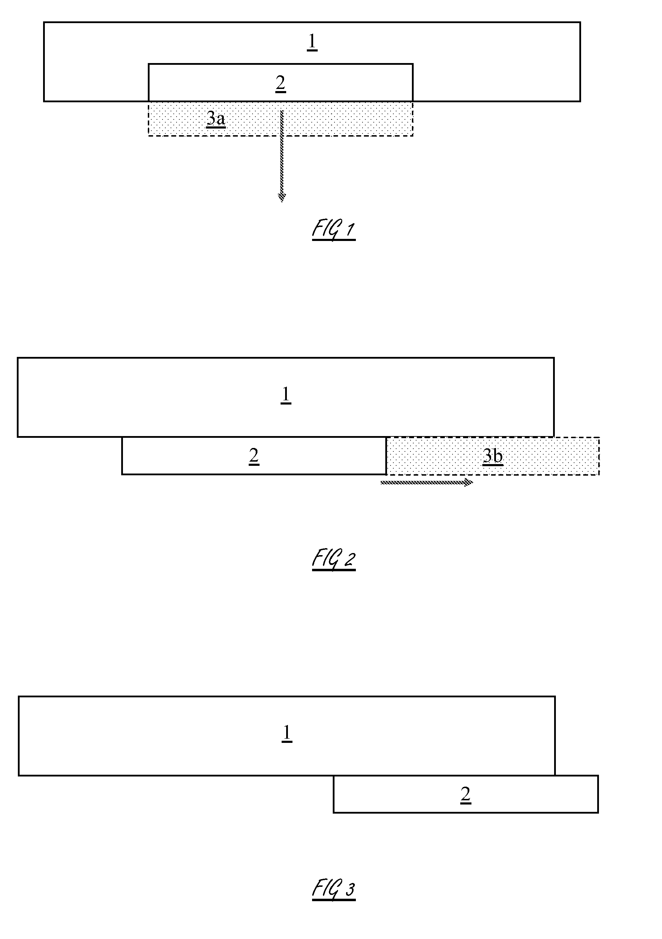

On a représenté schématiquement à la figure 1 un véhicule automobile 1 dont l'avant est tourné du côté gauche.

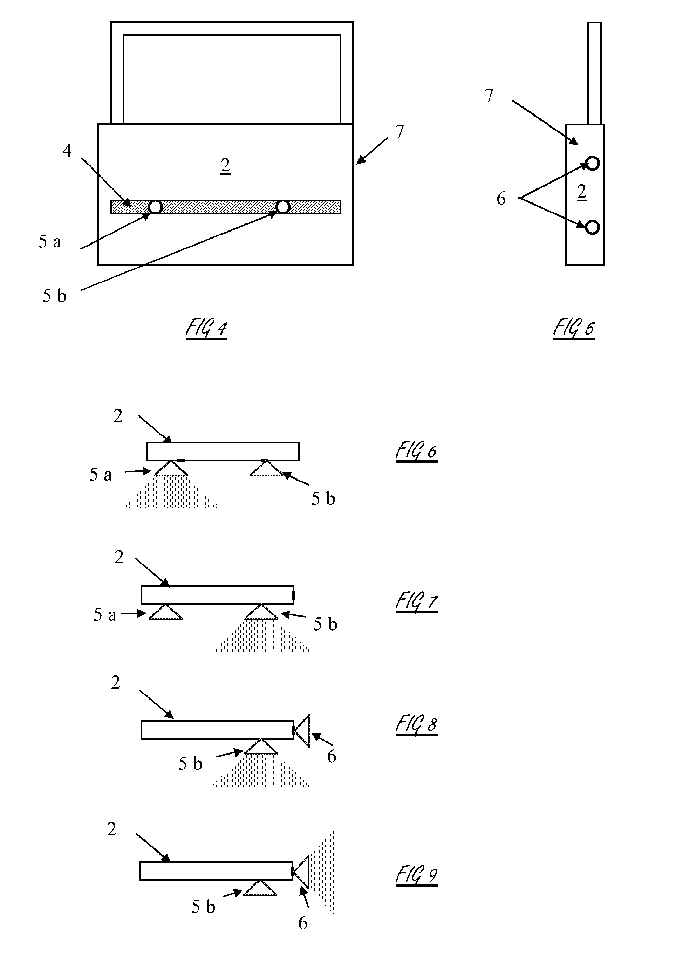

Ce véhicule est équipé d'une porte latérale coulissante 2, qui doit, pour passer de sa position de fermeture à sa position d'ouverture maximale, effectuer classiquement un mouvement de déhanchement consistant en un déplacement latéral, selon le sens de la flèche de la figure 1, avant de pouvoir coulisser vers l'arrière du véhicule 2 en longeant la carrosserie de ce dernier, selon le sens de la flèche de la figure 2.

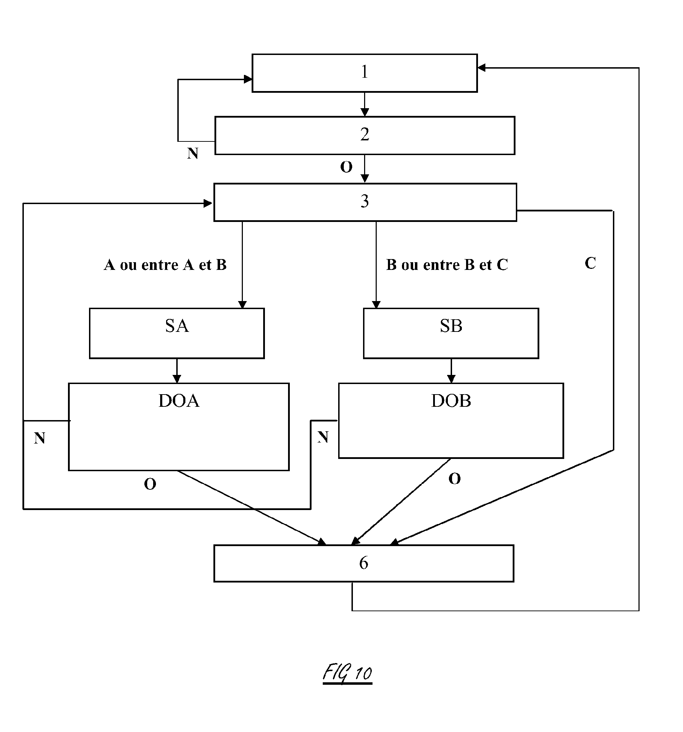

Dans sa position d'ouverture maximale, la porte latérale coulissante 2 se retrouve dans une configuration correspondant à la figure 3. Dans cette position, la porte 2 est susceptible de dépasser de l'extrémité arrière de la carrosserie du véhicule 1. On entend par extrémité arrière le point le plus reculé du véhicule 1.

Pour la commodité de l'exposé, nous dénommerons dans la suite de la description la position de fermeture de la porte 2, la position A (figure 1), la position intermédiaire de la porte terminant son déhanchement latéral, la position B (figure 2), et la position d'ouverture maximale de la porte, la position C (figure 3).

Le dispositif d'actionnement de la porte 2 selon l'invention comprend un moteur (non représenté) agissant sur la porte 2 en fonction d'un signal émis par un boîtier de gestion électronique (non représenté) de la porte 2. Ce boîtier recueille des consignes diverses telles qu'une demande d'ouverture ou de fermeture de la part de l'utilisateur, et également la position réelle de la porte.

On notera que la position de la porte 2 peut être déterminée via un capteur à effet hall, mesurant le couple moteur et renvoyant une quantité de signaux correspondante. Un comptage des signaux générés permet d'en déduire de manière relativement précise la position réelle de la porte.

Dans la position A, la porte est appliquée contre la carrosserie du véhicule de manière à présenter une surface extérieure affleurante (figure 1). Des moyens de détection 5a, 5b d'un obstacle latéral situé dans l'espace latéral adjacent 3a sont prévus sur la porte 2 et sont activés lorsque le boîtier de gestion électronique de la porte 2 reçoit une consigne d'ouverture de la porte 2. Ces moyens de détection 5a, 5b d'un obstacle latéral restent activés tant que la porte 2 reste entre les positions A et B.

Comme cela est illustré à la figure 4, de tels moyens de détection 5a, 5b d'obstacle latéral peuvent être montés sur le côté latéral de la porte 2, par exemple sur une baguette de finition latérale 4, permettant de les intégrer à un équipement existant et avec un souci d'esthétique. Toutefois, dans une variante de réalisation non représentée, ces moyens de détection 5a, 5b d'obstacle latéral peuvent également être situés en partie inférieure de la porte 2, avec une meilleure dissimulation visuelle, en considérant qu'un obstacle aura dans la quasi majorité des cas un départ au sol sensiblement dans son aplomb vertical.

Ces moyens de détection 5a, 5b d'obstacle latéral peuvent être des capteurs du type à ultrason, ou capacitif/inductif ou à infra rouge, ou laser, ou vidéo ou tout autre type de capteur de proximité équivalent.

De préférence, comme cela est visible à la figure 4, on compte au moins un capteur avant 5a et un capteur arrière 5b, de manière à scruter la zone adjacente de la porte sur toute sa longueur. Dans des variantes de réalisation de l'invention non représentées, on peut prévoir un capteur unique ou plus de deux capteurs d'obstacle latéral, le long de la porte 2. De plus, on peut prévoir un ou plusieurs capteurs ayant chacun une forme allongée, de manière à couvrir une zone suffisamment étendue.

Dès lors qu'aucun obstacle n'est identifié dans l'environnement latéral adjacent 3a à la porte 2, le boîtier de gestion commande le déhanchement de la porte 2 jusqu'à la position B (figure 2).

Selon l'invention, des moyens de détection 6 d'un obstacle longitudinal situé dans l'espace longitudinal adjacent 3b sont prévus sur la porte 2 et sont activés lorsque la porte 2 a atteint la position B, et restent activés tant que la porte 2 se trouve entre sa position B et sa position C.

Les moyens de détection 6 d'un obstacle longitudinal peuvent être du même type que les moyens de détection 5a, 5b d'un obstacle latéral, tel que évoqué précédemment ou d'un type différent.

Ces moyens de détection 6 d'un obstacle longitudinal peuvent être constitués d'un seul ou de plusieurs capteurs de proximité superposés et disposés sur le chant arrière 7 de la porte 2.

Pour des raisons de coût, il est possible de ne prévoir qu'un seul capteur 6, de préférence dans la partie inférieure de la porte 2. On notera que de tels capteurs 6 situés sur le chant arrière 7 de la porte 2 sont relativement protégés contre toute dégradation, notamment due à des coups, compte tenu de leur intégration dans une zone inaccessible extérieurement lorsque la porte 2 est fermée. Cette implantation est du reste très avantageuse sur le plan esthétique, lorsque la porte 2 est fermée.

Considérant que lorsque la porte 2 se trouve entre sa position B et sa position C, elle reste sensiblement à la même distance de la carrosserie du véhicule 1, il n'est donc pas indispensable de continuer à activer les moyens de détection 5a, 5b d'un obstacle latéral. En effet, il peut être souhaitable de les désactiver aux fins de préserver au maximum leur durée de vie.

Dans un mode de réalisation de l'invention, on peut prévoir qu'une partie seulement des moyens de détection est désactivée, par exemple le capteur avant 5a, tandis qu'une autre partie, par exemple le capteur arrière 5b, reste active. Il peut en effet être judicieux de continuer à activer une partie 5b des moyens de détection d'un obstacle latéral qui se trouve le plus en arrière de la porte 2, de manière à couvrir une zone adjacente un peu plus large que la stricte zone 3b située dans le prolongement longitudinal du chant 7 de la porte 2, de manière à offrir une sécurité accrue, par exemple dans l'hypothèse où une personne se trouverait dans le voisinage arrière de la porte 2 mais légèrement en retrait latéral de celle-ci.

Dans le cas où au moins deux des moyens de détection 5a, 5b et 6 sont de type à ultrason, il est possible de les faire fonctionner de manière croisée afin d'optimiser leur capacité de détection d'un obstacle. Un capteur à ultrason peut en effet fonctionner en mode émission et en mode réception. L'un des capteurs peut émettre un signal. Un signal en retour peut être perçu par ce même capteur ou par un autre capteur fonctionnant uniquement en mode réception. Ainsi, selon l'invention, il est possible de réaliser une triangulation de la zone à surveiller, en faisant fonctionner l'un des capteurs en mode émission et les autres en mode réception, puis de réaliser une permutation circulaire, de sorte que tour à tour chaque capteur émet et les autres reçoivent.

Le mode de fonctionnement du dispositif de détection d'obstacle comprenant des moyens de détection du type à ultrason va être expliqué en référence aux différentes stratégies illustrées à la figure 10.

Lorsque la porte 2 est fermée ou arrêtée en position intermédiaire et qu'aucune demande d'ouverture n'est consignée par le boîtier de gestion électronique de la porte, les moyens de détection 5a, 5b et 6 sont inactifs (étapes 1 et 2 de la figure 10).

Lorsqu'une demande d'ouverture de la porte est consignée par le boîtier de gestion, un relevé de la position de la porte est réalisé (étape 3), et selon le résultat obtenu, les stratégies suivantes sont déclenchées.

Dans une première phase de déplacement, lorsque la porte 2 se trouve entre la position A et la position B, la stratégie de détection SA est déclenchée : le capteur avant 5a émet un signal et les capteurs avant 5a et arrière 5b sont en mode réception (figures 6). Puis le capteur 5b émet un signal et les deux capteurs 5a et 5b sont en mode réception (figure 7) et ainsi de suite. Dès qu'un capteur reçoit un signal de retour positif, traduisant la présence d'un obstacle (étape DOA), le boîtier de gestion interdit son ouverture ou commande immédiatement l'arrêt de la porte 2 (étape 6).

Dans une seconde phase de déplacement, lorsque la porte 2 se trouve entre la position B et la position C, la stratégie de détection SB est déclenchée : le capteur avant 5a est désactivé. Le capteur arrière latéral 5b émet un signal et les capteurs arrière latéral 5b et longitudinal 6 sont en mode réception (figure 8). Puis l'un des capteurs longitudinaux 6 émet un signal et les autres, dont le capteur arrière latéral 5b, sont en mode réception (figure 9) et ainsi de suite. Dès qu'un capteur reçoit un signal de retour positif, traduisant la présence d'un obstacle (étape DOB), le boîtier de gestion commande immédiatement l'arrêt de la porte 2 (étape 6).

Si la porte 2 est dans sa position C, bien entendu, le boîtier de gestion commande à la porte 2 de rester dans cette position (étape 6), tant qu'il n'a pas reçu de consigne de fermeture.

Il est à prévoir, en fonction de la vitesse de déplacement de la porte 2 et de son inertie, que l'arrêt ne sera pas instantané dès la détection de l'obstacle. Le champ de détection des capteurs et leur sensibilité doivent donc être adaptés à ce que la porte puisse s'arrêter effectivement avant de heurter l'obstacle.

Avantageusement, en cas de détection d'obstacle, on peut prévoir un retour d'information vers l'habitacle du véhicule ou vers la télécommande dans le cas d'une action effectuée par l'utilisateur depuis l'extérieur du véhicule. Ce retour d'information a la forme d'un signal spécifique qui peut être visuel, sonore ou tactile, par exemple sous la forme d'une vibration de l'organe de commande, indiquant à l'utilisateur les raisons du blocage ou de l'interdiction d'ouverture de la porte (2).

Bien entendu, l'invention n'est pas limitée aux moyens qui viennent d'être décrits et comprend tous les équivalents techniques.

## Revendications

1. Dispositif d'actionnement motorisé d'une porte (2) coulissante d'un véhicule automobile (1), dans une première phase de déplacement depuis une position de fermeture appliquée contre la carrosserie du véhicule (1), jusqu'à une position de déhanchement écartée de ladite carrosserie mais sensiblement en vis à vis de l'ouverture ménagée dans la carrosserie, puis dans une seconde phase de déplacement, depuis la position de déhanchement jusqu'à une position d'ouverture maximale, écartée de ladite carrosserie et en retrait de l'ouverture ménagée dans la carrosserie, selon la direction longitudinale du véhicule (1), comprenant un moteur agissant sur la porte (2) en fonction d'un signal émis par un boîtier de gestion électronique de la porte (2) à partir de consignes telles qu'une demande d'ouverture ou de fermeture émanant de l'utilisateur ainsi que la position de la porte (2), **caractérisé en ce qu'**il comprend des moyens de détection d'obstacle situés sur la trajectoire de la porte (2) aptes à envoyer un signal au boîtier de gestion en cas d'obstacle, arrêtant ou interdisant toute action du moteur sur la porte (2).

2. Dispositif selon la revendication 1, **caractérisé en ce que** les moyens de détection comprennent des premiers moyens de détection (5a, 5b) d'un obstacle latéral situé sur la trajectoire de la porte (2) dans une zone latérale adjacente de celle-ci (2), et des seconds moyens de détection (6) d'un obstacle longitudinal situé sur la trajectoire de la porte (2) dans une zone longitudinale adjacente de celle-ci, lesdits moyens de détection (5a, 5b, 6) étant aptes à envoyer un signal au boîtier de gestion en cas d'obstacle, arrêtant ou interdisant toute action du moteur sur la porte (2).

3. Dispositif selon la revendication 2, **caractérisé en ce que** les premiers moyens de détection (5a, 5b) sont activés lors de la première phase de déplacement, tandis que les seconds moyens de détection sont activés lors de la seconde phase de déplacement.

4. Dispositif selon la revendication 3, **caractérisé en ce qu'**au moins une partie des premiers moyens de détection (5a, 5b) est désactivée lors de la seconde phase de déplacement.

5. Dispositif selon l'une quelconque des revendications 2 à 4, **caractérisé en ce que** les premiers moyens de détection (5a, 5b) d'obstacle sont situés sur le côté de la porte (2) tandis que les seconds moyens de détection (6) d'obstacle sont situés sur le chant (7) de la porte (2) tourné du côté de la trajectoire à parcourir.

6. Dispositif selon l'une quelconque des revendications précédentes, **caractérisé en ce qu'**au moins une partie des moyens de détection (5a, 5b, 6) d'obstacle sont des capteurs à ultrason.

7. Procédé de gestion des capteurs de proximité intervenant dans le dispositif selon l'une quelconque des revendications 1 à 5, **caractérisé en ce que** parmi l'ensemble des capteurs à ultrason activés, il comprend les étapes suivantes :
- un capteur émet un signal,
- la totalité des capteurs se met en mode réception d'un éventuel signal de retour renvoyé par un obstacle,
et ainsi de suite, chaque capteur émet un signal à tour de rôle et selon une permutation circulaire.

8. Véhicule automobile (1), comprenant une porte latérale coulissante (2), déplaçable de manière motorisée entre une position de fermeture appliquée contre la carrosserie et une position d'ouverture maximale, écartée de ladite carrosserie et en retrait de l'ouverture ménagée dans la carrosserie, selon la direction longitudinale du véhicule (1), **caractérisé en ce qu'**il comprend un dispositif d'actionnement de la porte coulissante (2) selon l'une quelconque des revendications 1 à 6.

9. Véhicule automobile (1) selon la revendication 8, **caractérisé en ce que** la position d'ouverture maximale de la porte coulissante (2) correspond à un dépassement longitudinal de la porte (2) vers l'avant ou vers l'arrière par rapport à l'extrémité respectivement avant ou arrière de la carrosserie du véhicule (1).
